# FASCICULE DE BREVET EUROPEEN

(11) **EP 4 355 620 B1**
(45) Date de publication et mention de la délivrance du brevet: **01.04.2026**
(21) Numéro de dépôt: 22731655.1
(22) Date de dépôt: 03.06.2022
(51) Int. Cl.: B60R 19/18, B60R 19/24

(54) **DISPOSITIF D'ABSORPTION D'ENERGIE**
ENERGIEABSORBIERENDE VORRICHTUNG
ENERGY-ABSORBING DEVICE

(30) Priorité: 16.06.2021 FR 2106372
(43) Date de publication de la demande: 24.04.2024
(73) Titulaire: Valeo Electrification, 95892 Cergy Pontoise (FR)
(72) Inventeur: MITIDIERI, Enzo, 78322 Le Mesnil-Saint-Denis Cedex (FR); DA COSTA PITO, Sergio, 78322 Le Mesnil-Saint-Denis Cedex (FR)
(74) Mandataire: Valeo Powertrain Systems
(86) Numéro de dépôt international: PCT/EP2022/065153
(87) Numéro de publication internationale: WO 2022/263205

(56) Documents cités:
- EP-A1- 0 950 828
- EP-A1- 1 348 884
- EP-A1- 1 733 927
- EP-A2- 1 426 241
- WO-A1-2019/043090
- GB-A- 2 552 081
- JP-A- 2011 051 508
- US-A- 6 164 709
- US-A1- 2006 131 901
- US-A1- 2019 359 158

## Description

La présente invention se rapporte au domaine des dispositifs d'absorption d'énergie équipant un véhicule, notamment automobile. Plus particulièrement, l'invention se rapporte à un dispositif d'absorption d'énergie disposé sur un élément à protéger d'un véhicule, notamment automobile, l'élément à protéger étant par exemple une caisse du véhicule ou une batterie électrique du véhicule.

Les dispositifs d'absorption d'énergie des véhicules automobiles sont habituellement installés entre un pare-chocs et un longeron dudit véhicule. Qu'ils soient positionnés au niveau du pare-chocs avant ou du pare-chocs arrière du véhicule automobile, les dispositifs d'absorption d'énergie ont pour fonction d'absorber au moins en partie l'énergie transférée au véhicule lors de potentiels impacts avec des objets extérieurs.

Plus particulièrement, les dispositifs d'absorption d'énergie permettent d'éviter que cette énergie soit transmise intégralement aux longerons du véhicule et de limiter ainsi leur déformation lors de ces impacts, étant entendu que le remplacement d'un longeron, élément structurel important du soubassement du véhicule, nécessiterait des opérations coûteuses.

Pour atteindre les performances d'absorption de choc souhaitées, il est connu de réaliser des dispositifs d'absorption d'énergie dans un métal approprié auquel on peut associer un absorbeur complémentaire en polystyrène expansé ou tout autre matériau similaire.

Ces dispositifs d'absorption d'énergie présentent l'inconvénient d'être lourds et volumineux. En outre, du fait des dimensions de ces dispositifs nécessaires pour l'obtention des performances recherchées, il est difficile de rendre compatible ces dispositifs avec l'encombrement et le style global du véhicule. Par ailleurs, la structure interne de ces dispositifs d'absorption d'énergie est sensiblement identique en tout point ce qui limite, voire empêche, d'adapter la structure en fonction de l'emplacement et de la forme donnée ainsi que d'améliorer significativement la capacité d'absorption d'énergie de ces dispositifs d'absorption d'énergie. Le document US 2019/359158 A1 divulgue un dispositif d'absorption d'énergie de véhicule conforme au préambule de la revendication 1.

Le but de l'invention est donc de palier à au moins un des inconvénients susmentionnés en proposant un nouveau dispositif d'absorption d'énergie dont la structure et la composition permettent d'assurer l'encaissement des efforts en cas de chocs pour éviter la transmission des efforts aux éléments à protéger du véhicule tout en permettant une intégration aisée dans le véhicule et une structure interne modulable.

L'invention propose un dispositif d'absorption d'énergie de véhicule avec les caractéristiques de la revendication 1.

Le dispositif d'absorption d'énergie est destiné à protéger un élément du véhicule de chocs dus à un ou plusieurs objets extérieurs au véhicule. Le dispositif de d'absorption est tel qu'il se développe selon l'une direction principale d'allongement. Le dispositif d'absorption présente en outre une face extérieure destinée à recevoir un impact.

Le dispositif d'absorption d'énergie présente la particularité de comporter au moins une âme et au moins une structure plastique qui forme une structure monobloc avec l'âme. Il faut entendre ici, ainsi que dans tout ce qui suit, par « monobloc », que la structure plastique et l'âme forment un unique ensemble ne pouvant être séparé sans entrainer la détérioration d'au moins l'un de la structure plastique et/ou de l'âme. En d'autres termes, la structure plastique ne peut être dissociée de l'âme sans que l'une ou l'autre ne soit détériorée.

L'âme est composée d'un matériau d'absorption d'énergie de sorte à empêcher la propagation de l'énergie dégagée à la suite d'un ou de chocs et ainsi préserver l'élément à protéger. En outre, l'âme comporte une forme ondulée, la forme ondulée étant une succession d'au moins une élévation et d'au moins une dépression qui sont aussi appelées crêtes. La forme ondulée comprend préférentiellement une pluralité d'élévations et de dépressions. Les crêtes se succèdent le long d'une direction d'extension qui est parallèle à la direction principale d'allongement du dispositif d'absorption d'énergie. Cet arrangement de la forme ondulée de l'âme par rapport à l'ensemble du dispositif d'absorption d'énergie permet encore d'améliorer la capacité d'absorption d'énergie de l'âme et donc du dispositif d'absorption d'énergie selon l'invention.

Selon un mode de réalisation, la succession de crêtes s'étend au moins en partie sur une longueur du dispositif d'absorption d'énergie, selon la direction principale d'allongement. Préférentiellement, la succession de crêtes s'étend sur toute la longueur du dispositif d'absorption d'énergie, selon la direction principale d'allongement. La longueur du dispositif d'absorption d'énergie est la distance entre deux extrémités longitudinales du dispositif mesurée le long de la direction principale d'allongement.

Selon l'invention, la face externe est formée au moins en partie par des crêtes, préférentiellement une majorité des crêtes, de la forme ondulée de l'âme. Ainsi, une partie des crêtes participent à définir un plan qui correspond à la face externe. Par conséquent, une partie des crêtes est agencée de manière à recevoir l'énergie résultant d'un ou de chocs.

Cette configuration est particulièrement avantageuse car elle permet d'augmenter la force de réaction appliquée sur l'objet entrant en collision avec le dispositif d'absorption d'énergie de façon progressive sans créer de pic de force. De plus, le dispositif d'absorption d'énergie permet d'absorber davantage d'énergie avec le même niveau de déformation. Ainsi, l'invention permet d'obtenir un dispositif d'absorption d'énergie plus efficient tout en étant moins lourd pour le même résultat obtenu.

Selon un mode de réalisation, la face externe est formée au moins en partie par au moins une tranche de la forme ondulée de l'âme. Une tranche de la forme ondulée correspond à une section de cette forme ondulée dans un plan de coupe transversal et vertical, comprenant la direction d'extension des crêtes, et formant une sinusoïde dans laquelle s'inscrivent les crêtes successives. Autrement dit, la forme ondulée est composée par une multitude de tranches empilées longitudinalement les unes sur les autres, et une tranche disposée à l'extrémité longitudinale de cet empilement participe à définir au moins en partie la face externe. Dans ce contexte, une face supérieure du dispositif d'absorption est définie par au moins une partie des crêtes de la forme ondulée, la face supérieure étant une face reliant la face externe à une face interne qui est opposée à la face externe, la face interne étant en vis-à-vis de l'élément à protéger.

Il convient de noter que dans ce mode de réalisation, la face externe est formée au moins en partie par des bords d'extrémités longitudinaux de la forme ondulée, formant des arêtes, ces arêtes étant noyées dans la structure plastique. La matière plastique utilisée peut notamment présenter une raideur fiable, inférieure par exemple à 2 GPa, et être ductile, avec une élongation à rupture supérieure à 20%, de sorte que la matière plastique est susceptible de se déformer, sous des efforts mesurés sans faire apparaître ces arêtes.

Selon un mode de réalisation, les crêtes de la forme ondulée présentent un rayon de courbure qui varie selon la direction d'extension de la succession de crêtes. Le rayon de courbure d'une crête correspond au rayon d'un cercle dans lequel s'inscrit la crête, le cercle étant vu sur un plan comprenant la direction d'extension de la succession de crêtes. Les crêtes peuvent ainsi présenter des formes arrondies différentes selon leur emplacement au sein du dispositif d'absorption d'énergie et améliorer leur efficacité en cas de chocs.

Selon un mode de réalisation, les crêtes de la forme ondulée présentent un rayon de courbure qui est sensiblement constant le long de la direction d'extension de la succession de crêtes. Il faut entendre ici, ainsi que dans tout ce qui suit, par sensiblement que les tolérances de fabrication, ainsi que d'éventuelles tolérances d'assemblage, doivent être prises en compte. Autrement dit, les crêtes ont toutes le même rayon de courbure le long de la direction d'extension de la succession de crêtes.

Selon un mode de réalisation, le rayon de courbure des crêtes de la forme ondulée, qui est fonction du matériau employé et de son épaisseur, peut présenter un rayon intérieur de l'ordre d'au moins 5 millimètres.

Selon un mode de réalisation, la forme ondulée présente une amplitude qui varie selon la direction d'extension de la succession de crêtes. L'amplitude est la distance entre la projection de deux crêtes successives sur un plan perpendiculaire à la direction d'extension de la succession de crêtes. Ainsi, dans une première partie de la forme ondulée, l'amplitude présente une première valeur et dans une deuxième partie de la forme ondulée, l'amplitude présente une deuxième valeur différente de la première valeur. Cette caractéristique contribue à adapter la structure de l'âme à la forme générale du dispositif d'absorption d'énergie tout en conservant les propriétés d'absorption d'énergie de l'âme de manière adéquates.

Selon un mode de réalisation, la forme ondulée présente une amplitude qui est sensiblement constante le long de la direction d'extension de la succession de crêtes.

A titre d'exemple non limitatif, l'amplitude de la forme ondulée peut notamment être comprise entre 5mm et 50mm.

Selon un mode de réalisation, la forme ondulée présente un pas qui varie selon la direction d'extension de la succession de crêtes. Le pas est la distance entre deux motifs consécutifs de la forme ondulée mesurée le long de la direction d'extension de la succession de crêtes. Un motif comprend deux crêtes adjacentes. Il est ainsi possible d'avoir des zones dans l'âme présentant chacune un pas différent ce qui autorise à adapter les propriétés de la formes ondulées en fonction de la position des zones au sein de l'âme du dispositif d'absorption d'énergie.

Selon un mode de réalisation, la forme ondulée présente un pas qui est sensiblement constant selon la direction d'extension de la succession de crêtes.

A titre d'exemple non limitatif, le pas de la forme ondulée peut notamment être compris entre 50mm et 200mm.

La largeur du dispositif d'absorption d'énergie est la distance entre la face externe du dispositif d'absorption d'énergie et une face interne du dispositif d'absorption d'énergie opposée à la face externe mesurée le long d'une direction perpendiculaire à la direction d'extension, perpendiculaire à la face interne et perpendiculaire à la face externe.

La hauteur de du dispositif d'absorption d'énergie est la distance entre une face supérieure du dispositif d'absorption d'énergie et une face inférieure du dispositif d'absorption d'énergie opposée à la face supérieure mesurée le long d'une direction perpendiculaire à la direction d'extension, perpendiculaire à la face supérieure et perpendiculaire à la face inférieure. La face supérieure et la face inférieure relient la face externe à la face interne. Dans ce contexte, on comprend que, selon le cas, la hauteur du dispositif d'absorption d'énergie ou la largeur du dispositif d'absorption d'énergie est sensiblement égal au pas de la forme ondulée.

Selon un mode de réalisation, la forme ondulée présente une forme variable le long de la direction d'allongement du dispositif d'absorption d'énergie, en comportant au moins une première partie et une deuxième partie, la première partie de la forme ondulée présentant une configuration différente d'une configuration de la deuxième partie de la forme ondulée. Il convient de noter que les parties distinctes de la forme ondulée peuvent notamment présenter des configurations différentes en ce que la valeur du pas, la valeur de l'amplitude et/ou la valeur du rayon de courbure diffèrent d'une partie à l'autre. Il est ainsi possible de faire varier la structure interne du dispositif d'absorption d'énergie en modifiant le pas au sein de la forme ondulée, l'amplitude au sein de la forme ondulée et/ou le rayon de courbure des crêtes au sein de la forme ondulée de manière à créer plusieurs zones dans la zone ondulée qui sont adaptées aux caractéristiques techniques et esthétiques voulues pour le dispositif d'absorption d'énergie. Le dispositif d'absorption d'énergie est ainsi modulable et adaptable à volonté, et il convient de noter que c'est notamment la structure du dispositif d'absorption d'énergie, avec son âme et sa structure plastique formant un ensemble monobloc, qui permet cette modularité.

Selon un mode de réalisation, le dispositif d'absorption d'énergie comprend une face interne, opposée à la face externe, les moyens de fixation faisant saillie depuis la face interne et comprenant une interface de connexion qui se développe dans un plan principal d'allongement de la face interne. On comprend que la face interne est destinée à être en vis-à-vis de l'élément à protéger contrairement à la face externe qui est opposé à la face interne et est destinée à absorber au moins en partie l'énergie transférée au véhicule lors de potentiels impacts avec des corps extérieurs.

Selon un mode de réalisation, les moyens de fixation sont intégrés dans un volume défini par des faces de la structure plastique, les moyens de fixation comprenant des fûts formés dans la structure plastique.

Selon une caractéristique de l'invention, les moyens de fixation peuvent être agencés de telle sorte que la fixation du dispositif d'absorption d'énergie est réalisée dans un plan sensiblement confondu avec le plan défini par la face interne du dispositif d'absorption d'énergie. L'empattement, c'est-à-dire le dimensionnement longitudinal du véhicule sur lequel est monté un tel dispositif d'absorption d'énergie, est alors considérablement réduit, aucun absorbeur d'énergie n'étant à interposer entre la structure du véhicule et le bloc transversal formant le dispositif d'absorption d'énergie. Dans ce contexte, il peut être prévu qu'au moins la face interne du dispositif d'absorption d'énergie présente un galbe permettant de plaquer le dispositif d'absorption d'énergie contre la structure du véhicule en s'adaptant au galbe de ce véhicule.

Selon un mode de réalisation de l'invention, le dispositif d'absorption d'énergie comporte une zone centrale d'absorption d'énergie agencée entre deux zones de fixation, par exemple respectivement définies par une platine formant une interface de fixation, la dimension selon la direction principale d'allongement de la zone centrale d'absorption étant au moins deux fois supérieure à la dimension correspondante d'une zone de fixation. De la sorte, on réalise un ensemble monobloc qui assure une absorption d'efforts homogène, régulièrement répartie sur les zones de fixation, sur une grande dimension transversale.

Selon l'invention, les moyens de fixation sont venus de matière avec la structure plastique. Il faut entendre ici, ainsi que dans tout ce qui suit, par « venu de matière », que les éléments venus de matière forment une seule et même pièce, et donc sont faits du ou des mêmes matériaux. Cette pièce peut être obtenue par exemple par moulage ou par injection. Cette pièce est donc différente d'éléments rapportés par soudage ou collage. Ces éléments venus de matière sont ainsi inséparables sans destruction de l'un et/ou de l'autre de ces éléments.

Selon un mode de réalisation, le matériau d'absorption d'énergie peut notamment consister en un mélange de fibres continues, parmi lesquelles des fibres de verre, des fibres de carbone, ou n'importe quelle fibre synthétique ou naturelle, et de résines thermoplastiques ou thermodurcissable.

Selon l'invention, le matériau d'absorption d'énergie est différent de l'armature plastique. L'armature plastique peut être constituée, à titre d'exemple, d'un matériau thermoplastique ou thermodurcissable, non renforcé, ou renforcé de fibres discontinues.

L'invention concerne en outre un véhicule, notamment automobile, comprenant au moins un élément à protéger des chocs et au moins un dispositif d'absorption d'énergie présentant au moins une des caractéristiques précédentes, le dispositif d'absorption d'énergie étant fixé à l'élément à protéger grâce aux moyens de fixation de sorte que la face externe est à l'opposé de l'élément à protéger et une face interne du dispositif d'absorption d'énergie opposée à la face externe est en regard de l'élément à protéger.

Selon un mode de réalisation, l'élément à protéger est une caisse du véhicule et/ou une batterie électrique du véhicule.

Selon un mode de réalisation, le dispositif d'absorption d'énergie est agencé sur un bas de caisse de la caisse du véhicule.

Selon un mode de réalisation, le dispositif d'absorption d'énergie est agencé sur une paroi de la batterie électrique du véhicule.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] La [Fig.1] est une représentation schématique d'un arrière d'une caisse de véhicule équipée d'un dispositif d'absorption d'énergie selon un premier mode de réalisation de l'invention ;
[Fig.2] La [Fig.2] est une vue rapprochée du dispositif d'absorption d'énergie de la [Fig.1] ;
[Fig.3] La [Fig.3] est une représentation schématique d'un motif formé au sein d'une structure plastique du dispositif d'absorption selon le premier mode de réalisation ;
[Fig.4] La [Fig.4] est une représentation schématique d'un motif formé dans la structure plastique dans un mode de réalisation alternatif au premier mode de réalisation de la [Fig.3] ;
[Fig.5] La [Fig.5] est une représentation schématique d'un motif au sein de la structure plastique dans un mode de réalisation alternatif à ceux illustrés sur la [Fig.3] et sur la [Fig.4] ;
[Fig.6] La [Fig.6] est une représentation schématique d'une caisse de véhicule équipée d'une pluralité de dispositifs d'absorption d'énergie, un des dispositifs d'absorption d'énergie selon un troisième mode de réalisation étant intercalé entre deux dispositifs d'absorption d'énergie selon un deuxième mode de réalisation de l'invention ;
[Fig.7] La [Fig.7] est une vue rapprochée du dispositif d'absorption d'énergie selon le deuxième mode de réalisation de la [Fig.6] ;
[Fig.8] La [Fig.8] est une vue rapprochée du dispositif d'absorption d'énergie selon le troisième mode de réalisation de la [Fig.6].
[Fig.9] La [Fig.9] est un ensemble de figures 9a, 9b illustrant l'énergie absorbée et la force de réaction au cours d'un impact, pour deux dispositif d'absorption d'énergie différents.

Il faut tout d'abord noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

Dans la description qui va suivre, les directions longitudinale, transversale et verticale sont définies en fonction d'un trièdre L,V,T illustré sur les figures. La direction selon laquelle un véhicule, notamment automobile, se déplace en ligne droite est définie comme étant une direction longitudinale L. Par convention, une direction perpendiculaire à la direction longitudinale, située dans un plan parallèle au sol, est nommée direction transversale T. Une troisième direction, perpendiculaire aux deux autres, est nommée direction verticale V. Le sens avant correspond au sens dans lequel le véhicule se déplace habituellement dans la direction longitudinale L et est opposé au sens arrière.

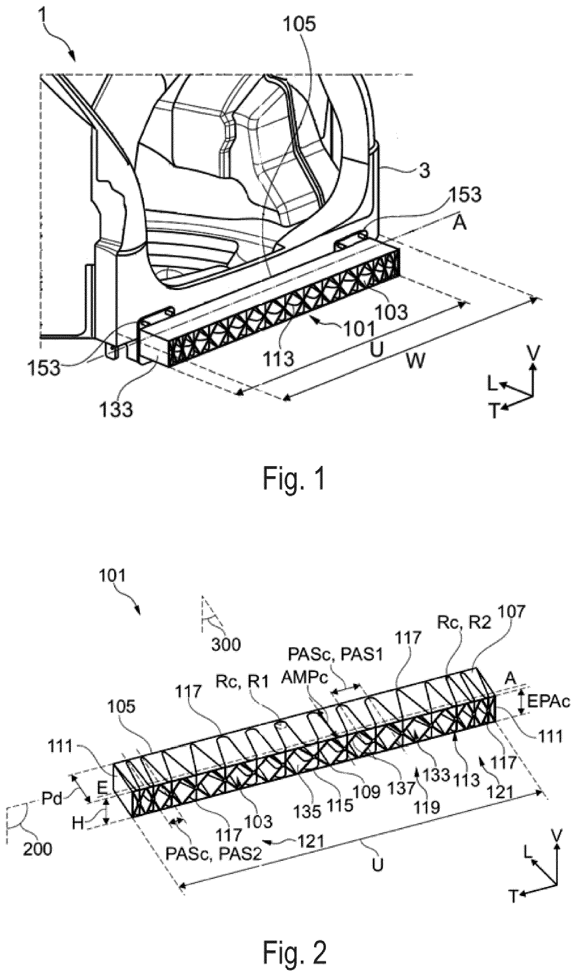

Un véhicule 1 automobile représenté sur la [Fig.1] comprend une caisse 3 et au moins un dispositif d'absorption d'énergie 101, ici représenté selon un premier mode de réalisation de l'invention, qui est agencé sur une portion de la caisse 3. Le dispositif d'absorption d'énergie 101 s'étend selon une direction principale d'allongement A parallèle à la direction transversale T du véhicule 1 telle que définie précédemment. Dans ce premier mode de réalisation, le dispositif d'absorption d'énergie 101 s'étend sur toute une longueur transversale W du véhicule 1, la longueur transversale W étant mesurée le long de la direction transversale T entre une première extrémité transversale et une deuxième extrémité transversale du véhicule 1.

Le dispositif d'absorption d'énergie 101 illustré sur la [Fig.1] est destiné à faire partie d'un pare-chocs arrière du véhicule 1 pour dissiper au moins en partie l'énergie générée par une collision entre le véhicule et un objet de sorte à protéger les victimes et/ou la caisse du véhicule et/ou les objets. Les victimes de la collision peuvent être par exemple les usagers de la voiture ou encore un piéton.

De manière plus générale, le dispositif d'absorption d'énergie selon l'invention peut être incorporé dans tout élément de carrosserie du véhicule comme, par exemple, un pare-chocs avant ou latéral. Le dispositif d'absorption d'énergie selon l'invention peut également être intégré dans un dispositif de protection équipant un véhicule pour protéger un ou plusieurs éléments particuliers du véhicule tels que la batterie électrique.

Le dispositif d'absorption d'énergie 101 comprend au moins une face externe 103 qui est destinée à absorber au moins en partie l'énergie transférée au véhicule lors d'une collision et au moins une face interne 105 opposée à la face externe 103 et tournée ici vers le centre du véhicule, en étant en regard d'une portion arrière de la caisse 3 du véhicule 1. De manière plus générale, indépendamment de l'application du dispositif d'absorption d'énergie qui est faite, la face interne 105 est destinée à être au moins en partie en vis-à-vis de l'élément à protéger lorsque le dispositif d'absorption d'énergie 101 est fixé au véhicule 1.

En référence à la [Fig.1], notamment lorsque le dispositif d'absorption d'énergie est agencé pour former un pare-chocs frontal ou arrière, la face externe 103 et la face interne 105 se développent chacune dans un plan perpendiculaire à l'axe longitudinal L du véhicule 1 telle qu'il a été défini auparavant.

Comme cela est plus visible sur la [Fig.2], la face externe 103 et la face interne 105 sont reliées l'une à l'autre par une face supérieure 107 et une face inférieure 109 opposée à la face supérieure 107 et par deux faces latérales 111. La face supérieure 107 et la face inférieure 109 se développent chacune dans un plan perpendiculaire à l'axe vertical V du véhicule 1. Les faces latérales 111 s'étendent chacune dans un plan perpendiculaire à l'axe transversal T du véhicule 1. Ainsi, on comprend que dans ce premier mode de réalisation le dispositif d'absorption d'énergie 101 présente une forme de parallélépipède rectangle.

On peut ainsi définir une longueur U du dispositif d'absorption d'énergie 101 comme étant la distance entre deux extrémités transversales du dispositif d'absorption d'énergie 101, qui correspondent ici aux faces latérales 111, mesurée le long de la direction principale d'allongement A.

On peut par ailleurs définir une largeur Pd du dispositif d'absorption d'énergie 101 comme la distance entre la face externe 103 et la face interne 105 du dispositif d'absorption d'énergie 101 mesurée le long de la direction longitudinale L, perpendiculaire à la direction d'allongement A, perpendiculaire à la face interne 105 et perpendiculaire à la face externe 103.

On peut aussi définir une hauteur H du dispositif d'absorption d'énergie 101 comme étant la distance entre deux extrémités verticales du dispositif d'absorption d'énergie 101, qui correspondent à la face supérieure 107 et à la face inférieure 109 du dispositif d'absorption d'énergie 101 mesurée le long d'une direction verticale V, perpendiculaire à la direction d'allongement A et perpendiculaire à la face supérieure 107 et à la face inférieure 109.

Aussi bien la longueur, la largeur que la hauteur peuvent être déterminées en fonction du volume qui est alloué dans le véhicule au dispositif d'absorption d'énergie, et/ou en fonction des zones d'impact définies et du taux d'absorption souhaité. Il est notable selon l'invention que la présence d'une âme en forme ondulée et d'une structure plastique formant une structure monobloc avec l'âme permet d'adapter facilement la forme ou les dimensions, selon ce qui est possible en termes d'encombrement, au cahier des charges à tenir.

Le dispositif d'absorption d'énergie 101 comprend des moyens de fixation 153 pour le rendre solidaire de la caisse 3 du véhicule 1. Les moyens de fixation 153 représentés sur la [Fig.1] s'étendent depuis la face interne 105 qui fait face à l'élément à protéger. Les moyens de fixation 153 comprennent une interface de connexion apte à coopérer avec des moyens de retenues, non visibles sur la [Fig.1], de la caisse 3 du véhicule 1. Tel qu'illustré, l'interface de connexion fait saillie, notamment verticale, du parallélépipède formant le dispositif d'absorption d'énergie.

L'interface de connexion se développe dans un plan parallèle à un plan principal d'allongement 200 de la face interne 105. Lorsque le dispositif d'absorption d'énergie 101 est monté sur la caisse 3 du véhicule, l'interface de connexion vient directement en contact avec une surface de réception du véhicule 1. Cette configuration est particulièrement intéressante car elle permet d'abandonner les blocs d'amortissement habituellement interposés entre la caisse du véhicule, et notamment les longerons, et la forme parallélépipédique du dispositif d'absorption d'énergie.

Le dispositif d'absorption d'énergie 101 comprend au moins une âme 113 composée d'au moins un matériau d'absorption d'énergie, et au moins une structure plastique 133 formant un ensemble monobloc avec l'âme 113. L'âme 113 et la structure plastique 133 vont chacune au moins en partie définir les faces 103, 105, 107, 109, 111 du dispositif d'absorption d'énergie 101, et plus particulièrement la face externe 103 et la face interne 105.

L'âme 113 est destinée à absorber l'énergie et la structure plastique 133 sert à la fois de support et de renfort de l'âme 113. Toutefois, il faut aussi noter que la structure plastique 133 permet de contribuer à l'ensemble des propriétés du dispositif d'absorption d'énergie 101 comme ce sera expliqué plus en détails ci-après.

Le matériau d'absorption d'énergie de l'âme 113 est différent de la structure plastique 133. Le matériau d'absorption d'énergie peut notamment consister en un mélange de fibres continues, parmi lesquelles des fibres de verre, des fibres de carbone, ou n'importe quelle fibre synthétique ou naturelle, et de résines thermoplastiques ou thermodurcissable.

En plus du matériau la constituant, la forme de l'âme 113 contribue à ses propriétés d'absorption d'énergie. L'âme 113 est ainsi particulière en ce qu'elle comporte une forme ondulée 115 dont les détails sont notamment visibles sur la [Fig.2]. La forme ondulée 115 est une succession d'au moins une élévation 117 et d'au moins une dépression 117 qui sont aussi appelées crêtes. Pour la suite de la description, la référence 117 désignera indifféremment une crête, une élévation et une dépression.

Dans le premier mode de réalisation particulièrement illustré sur la [Fig.1] et sur la [Fig.2], la forme ondulée 115 comprend une pluralité de crêtes 117 qui se succèdent le long d'une direction d'extension E avantageusement parallèle à la direction principale d'allongement A du dispositif d'absorption d'énergie 101. La forme ondulée 115 de l'âme 113 s'étend sur toute la longueur U du dispositif d'absorption d'énergie 101 pour garantir une absorption d'énergie continue sur sensiblement toute la longueur transversale W du véhicule 1.

Les crêtes 117 de la forme ondulée 115 sont orientées de sorte qu'une partie d'entre elles définit la face externe 103 du dispositif d'absorption d'énergie 101. Les crêtes 117 sont ainsi toutes inscrites dans le plan dans lequel s'étend la face externe 103. Plus particulièrement sur la [Fig.2], la majorité des crêtes 117 définit la face externe 103. Par conséquent, une partie des crêtes 117 est agencée de manière à recevoir l'énergie résultant d'un ou des chocs.

Dans le premier mode de réalisation illustré sur la [Fig.1] et sur la [Fig.2], la face supérieure 107 et la face inférieure 109 du dispositif d'absorption d'énergie 101 sont formées au moins en partie par au moins une tranche de la forme ondulée de l'âme 113, les tranches de la forme ondulée correspondant à une section de cette forme ondulée dans un plan de coupe transversal et vertical et formant une sinusoïde dans laquelle s'inscrivent les crêtes successives. Avantageusement, les bords d'extrémités longitudinaux de la forme ondulée, formant des arêtes tranchantes, sont ainsi orientés pour former au moins en partie la face supérieure et/ou la face inférieure, à savoir des faces qui ne sont pas directement en regard de l'élément à protéger du choc ou directement en regard de l'élément extérieur contre lequel le véhicule percute.

Les propriétés d'absorption d'énergie du dispositif d'absorption d'énergie 101 sont aussi fonction, en plus des matériaux utilisés, de caractéristiques de la forme ondulée 115 que sont une amplitude AMPc des crêtes 117, un rayon de courbure Rc des crêtes 117, un pas PASc des crêtes et l'épaisseur EPAc de la forme ondulée 115.

Ces caractéristiques peuvent varier d'une extrémité transversale à l'autre, et dans ce contexte, le dispositif d'absorption d'énergie, tel qu'illustré sur la [Fig.2], peut présenter un plan de symétrie 300, longitudinal et vertical.

L'amplitude AMPc est définie comme étant une distance entre la projection de deux crêtes 117 successives sur une direction perpendiculaire à la direction d'extension E de la succession de crêtes 117 et comprise dans un plan parallèle à un plan de développement de la face supérieure 107.

Comme cela est visible sur la [Fig.2], l'amplitude AMPc des crêtes 117 présente une valeur sensiblement constante selon la direction d'extension E. On voit aussi que l'amplitude AMPc est sensiblement égale à la largeur Pd du dispositif d'absorption d'énergie 101, les crêtes affleurant alternativement avec la face externe 103 et la face interne 105.

Le rayon de courbure Rc d'une crête 117 correspond au rayon d'un cercle dans lequel s'inscrit la crête 117, le cercle étant vu sur un plan comprenant la direction d'extension E de la succession de crêtes 117 et étant parallèle au plan de développement de la face supérieure 107. Les crêtes 117 peuvent présenter des rayons de courbure qui évoluent d'une extrémité transversale à l'autre du dispositif d'absorption d'énergie 101, et ainsi présenter des formes plus ou moins arrondies selon leur emplacement au sein du dispositif d'absorption d'énergie 101.

Dans l'exemple plus particulièrement illustré sur la [Fig.2], les crêtes d'une première partie 119 de la forme ondulée 115 présentent un premier rayon de courbure Rc de valeur R1 et les crêtes 117 d'une deuxième partie 121 de la forme ondulée 115 présentent un deuxième rayon de courbure Rc de valeur R2. Dans cet exemple, la première partie 119 est une partie centrale entourée de part et d'autre transversalement par deux deuxièmes parties 121, et le premier rayon de courbure Rc, R1 est plus grand que le deuxième rayon de courbure Rc, R2. Par conséquent, les crêtes 117 agencées au centre du dispositif d'absorption d'énergie 101 ont une forme plus arrondie que celle des crêtes 117 agencées transversalement sur les côtés de la deuxième partie 121.

La forme ondulée 115 illustrée sur la [Fig.1] ou sur la [Fig.2] peut comprendre au moins une autre partie dans laquelle les crêtes 117 présentent un rayon de courbure Rc différent du premier rayon de courbure Rc, R1 et différent du deuxième rayon de courbure Rc, R2.

Plus particulièrement, le rayon de courbure Rc des crêtes 117 de la forme ondulée 115 peut varier de façon régulière selon la direction d'extension E, avec un rayon de courbure Rc des crêtes 117 qui présente une valeur maximale au centre du dispositif et décroît dans les deux sens de la direction d'extension E, au fur et à mesure du rapprochement des extrémités transversales du dispositif.

Le pas PASc est défini comme étant la distance entre deux élévations 117 de la forme ondulée 115 disposées successivement en affleurement d'une même face définissant le dispositif d'absorption d'énergie, la face externe 105 dans l'exemple illustré sur la [Fig.2]. Le pas est mesuré le long de la direction d'extension E de la succession de crêtes 117. En d'autres termes, le pas PASc est la distance transversale, c'est-à-dire selon la direction d'extension E de la succession de crêtes 115, entre deux motifs successifs, chaque motif comprenant deux crêtes 117 adjacentes c'est-à-dire une élévation et une dépression.

Comme cela est visible plus particulièrement sur la [Fig.2], le pas PASc varie selon la direction d'extension E de la succession de crêtes 115. Plus précisément, les crêtes 117 d'une première partie 119 de la forme ondulée 115 présentent un premier pas PASc, PAS1 et les crêtes 117 d'une deuxième partie 121 de la forme ondulée 115 présentent un deuxième pas PASc, PAS2. Le premier pas PASc, PAS1 est plus grand que le deuxième pas PASc, PAS2. Par conséquent, les crêtes 117 de la première partie 119, ici la portion centrale du dispositif, sont moins rapprochées les unes des autres que dans la deuxième partie 121, ici les portions latérales disposées transversalement de part et d'autre de la portion centrale.

L'épaisseur EPAc de la forme ondulée 115 peut être définie comme étant la distance entre deux extrémités de la forme ondulée 115 mesurée le long d'un axe perpendiculaire à la direction d'extension E et contenue dans un plan parallèle au plan principal d'allongement 200 de la face interne 105. Plus particulièrement, dans le cas illustré ici où les crêtes 117 participent à délimiter la face externe 103, l'épaisseur est la distance entre deux tranches opposées de la forme ondulée formant respectivement des bords d'extrémité de la forme ondulée. Sur la [Fig.1] et sur la [Fig.2], l'épaisseur EPAc de la forme ondulée 115 est sensiblement constante le long de la direction d'extension E. Dans le cas d'espèce, l'épaisseur EPAc de la forme ondulée 115 correspond à la hauteur H du dispositif d'absorption d'énergie 101.

Les configurations peuvent ainsi différer sur la valeur du pas, la valeur de l'amplitude et/ou la valeur du rayon de courbure. On comprend dès lors qu'il est possible de faire varier une ou plusieurs caractéristiques de la forme ondulée de sorte que le dispositif d'absorption d'énergie présente des propriétés techniques et esthétiques voulues.

Tel que cela a été évoqué, le dispositif d'absorption d'énergie selon l'invention est tel que l'âme et la structure plastique forment un ensemble monobloc. Plus particulièrement, l'âme 113 du dispositif d'absorption d'énergie 101 est prise dans la masse constituée de la structure plastique 133. La structure plastique 133 est surmoulée sur l'âme 113.

La structure plastique 133 comprend une pluralité de parois parmi lesquelles des parois externes qui délimitent une enveloppe périphérique dans laquelle est inscrite l'âme 113 et des parois internes 135 qui s'étendent en travers de la structure plastique en reliant les unes aux autres les parois externes.

Les parois internes 135 présentent des bords d'extrémités longitudinaux qui, à une première extrémité longitudinale du dispositif, définissent au moins en partie la face externe 103 en complément d'au moins une partie des crêtes 117 de la forme ondulée 115 de l'âme. De manière additionnelle, les bords d'extrémités longitudinaux des parois internes, à une deuxième extrémité longitudinale du dispositif, peuvent définir au moins en partie la face interne 105 en complément d'au moins une partie des crêtes 117 de la forme ondulée 115 de l'âme.

Les parois internes 135 sont agencées de sorte que les bords d'extrémité longitudinaux présents au voisinage de la face externe, 103, respectivement de la face interne 105, forment ensemble un motif 137 vu dans le plan principal d'extension de la face externe 103, respectivement de la face interne 105, du dispositif d'absorption d'énergie.

Tel qu'illustré, le motif 137 formé par les bords d'extrémité longitudinaux des parois internes 135 de la structure plastique 133 au voisinage d'une des faces externe ou interne du dispositif d'absorption d'énergie 101 est un ensemble de lignes qui se coupent en s'étendant d'une paroi externe à l'autre de l'enveloppe périphérique de la structure plastique, vu dans le plan principal d'extension de la face externe 103.

Dans le premier mode de réalisation illustré sur les figures 1 à 3, le motif 135 formé par la structure plastique 133 sur la face externe 103 comprend une pluralité de losanges de dimensions différentes, ces dimensions variant selon la direction principale d'allongement A du dispositif d'absorption d'énergie 101. Dans un mode de réalisation non représenté, le motif formé par la structure plastique sur la face externe du dispositif d'absorption d'énergie, est un quadrillage.

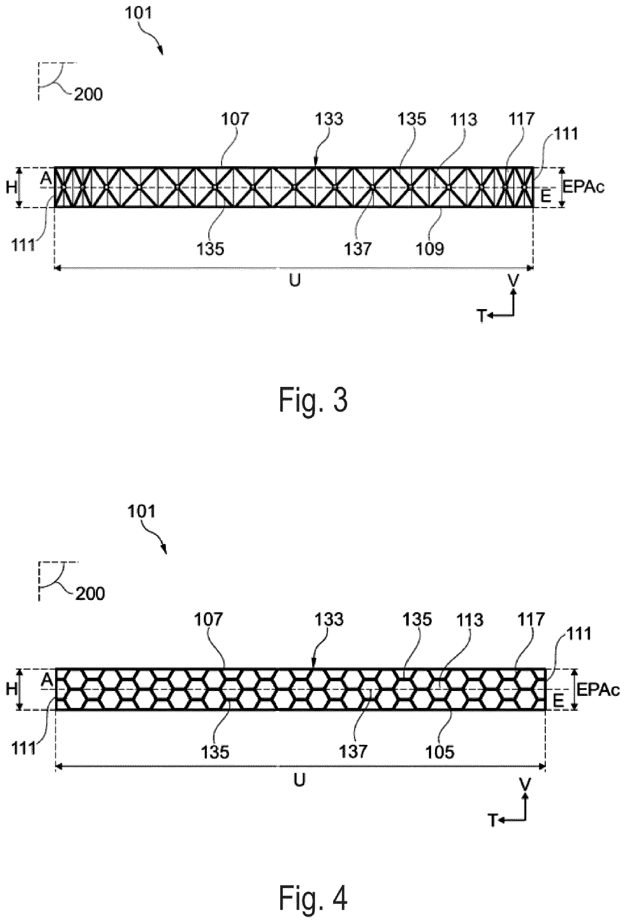

Il est possible de varier le motif 137 en modifiant l'agencement des parois et notamment des parois internes 135 de la structure plastique 135. Dans une première variante du premier mode de réalisation, les parois internes 135 sont agencées de telle manière que le motif 137 présente une structure en nid d'abeille telle qu'elle est visible sur la [Fig.4].

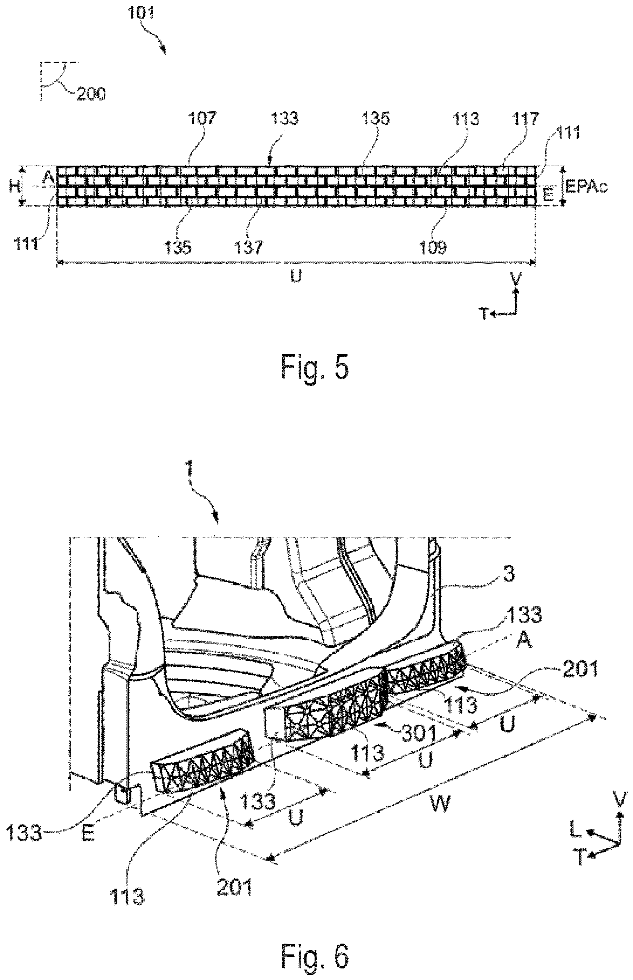

Dans une deuxième variante du premier mode de réalisation, les parois internes 135 de la structure plastique 133 sont agencées de sorte que le motif 137 présente une forme de rectangles agencés en quinconce, tel qu'illustré sur la [Fig.5].

Dans chacune de ces variantes, il convient de noter que l'épaisseur intrinsèque des parois internes a été représentée constante d'une paroi interne à l'autre, l'épaisseur intrinsèque devant ici être comprise comme la plus petite dimension de la plaque formant la paroi interne correspondante, indépendamment de la notion d'épaisseur EPAc de la forme ondulée qui se mesure elle selon la direction verticale. Et l'épaisseur intrinsèque des parois internes est la même d'une variante à l'autre. De manière alternative, sans que cela soit toutefois représenté, on peut prévoir que l'épaisseur intrinsèque d'au moins une paroi interne soit modifiée, par exemple augmentée, pour améliorer les propriétés d'absorption d'efforts du dispositif selon l'invention. Et on peut également prévoir qu'au sein d'un dispositif, les parois internes disposées dans une première partie de la structure plastique présentent une épaisseur intrinsèque différente de l'épaisseur intrinsèque des parois internes disposées dans une deuxième partie de la structure plastique, de manière à moduler les propriétés d'absorption en fonction de l'exposition de la zone correspondante du dispositif selon l'invention.

Bien que, sur les figures 1 à 5, le motif ne soit agencé que sur la face externe 103, il est tout fait possible d'en disposer de manière additionnelle ou alternative, sur une ou plusieurs autres faces du dispositif d'absorption d'énergie 101. De manière générale, cette caractéristique de la structure plastique permet donc de modifier les propriétés d'absorption d'énergie du dispositif d'absorption d'énergie 101.

La structure plastique 135 présente en outre l'avantage d'être venue de matière avec les moyens de fixation 153. Ainsi, en même temps que la structure plastique 133 est surmoulée sur l'âme 113, les moyens de fixations 153 sont aussi créés. Cela permet en outre de simplifier le montage du dispositif selon l'invention sur la caisse 3 du véhicule 1.

Il est aussi possible que le véhicule 1 soit équipée d'une pluralité de dispositifs d'absorption d'énergie selon l'invention. Ces dispositifs d'absorption d'énergie peuvent être disposés conjointement sur un élément à protéger du véhicule. Cela permet notamment d'agencer les dispositifs d'absorption d'énergie uniquement à des endroits de grande faiblesse mécanique de l'élément à protéger. En outre, cela permet de faciliter l'intégration de ces dispositifs sur l'élément à protéger.

Cette éventualité est représentée sur la [Fig.6] par un véhicule 1 comprenant deux dispositifs d'absorption d'énergie 201 selon un deuxième mode de réalisation de l'invention et un dispositif d'absorption d'énergie 301 selon un troisième mode de réalisation de l'invention. Les dispositifs d'absorption d'énergie 201, 301 sont destinés à faire partie d'un pare-chocs arrière. Cependant, ils peuvent tout aussi bien être disposés sur un autre élément du véhicule 1, telle qu'une batterie électrique, pour le protéger.

Les dispositifs d'absorption d'énergie 201, 301 sont disposées sur une partie arrière de la caisse 3 du véhicule 1. En référence à la [Fig.6], les dispositifs d'absorption d'énergie 201, 301 présentent chacun une longueur U inférieure à la longueur transversale W du véhicule 1, selon la direction transversale tel que précédemment évoqué. En outre, les directions principales d'allongement A des dispositifs d'absorption d'énergie 201, 301 sont parallèles entre elles. Préférentiellement, les directions principales d'allongement A des dispositifs d'absorption d'énergie 201, 301 sont confondues.

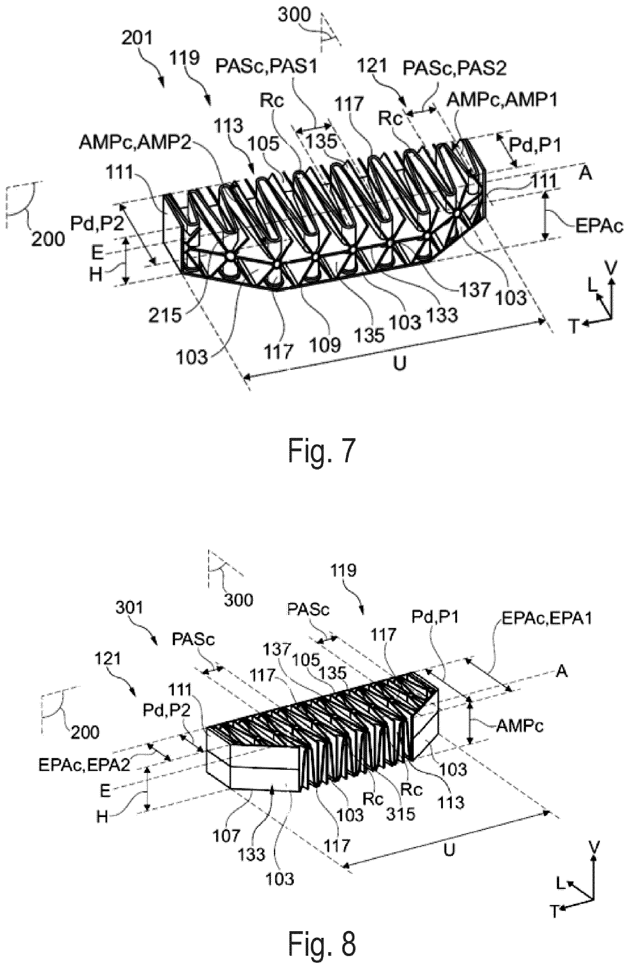

Le deuxième mode de réalisation du dispositif d'absorption d'énergie selon l'invention, illustré plus en détails sur la [Fig.7], diffère du premier mode de réalisation notamment en ce que l'amplitude AMPc de la forme ondulée 115 de l'âme 113 varie selon la direction d'extension E de la succession de crêtes 117 de la forme ondulée 115. Les éléments identiques au premier mode de réalisation sont désignés par les mêmes références. Pour plus de détails sur ces éléments identiques, on pourra se référer à la description ci-dessus.

En référence à la [Fig.7], la face interne 105 du dispositif d'absorption d'énergie 201 se développe dans le plan principal d'allongement 200 alors que la face externe 103 se développe dans une pluralité de plans dont au moins un est parallèle au plan principal d'allongement 200.

Plus particulièrement, une première portion de la face externe 103 se développe dans un premier plan, une deuxième portion de la face externe 103, qui forme une portion centrale de cette face externe, se développe dans un deuxième plan qui est parallèle au plan principal d'allongement 200, et une troisième portion se développe dans un troisième plan. Le premier plan et le deuxième plan sont sécants et non confondus l'un avec l'autre et sont sécants et non confondus avec le plan principal d'allongement 200.

Par conséquent, la largeur Pd du dispositif d'absorption d'énergie 201 varie le long de la direction principale d'allongement A c'est-à-dire le long de la direction d'extension E de la succession des crêtes 117 de la forme ondulée 115 de l'âme 113 formant le dispositif d'absorption d'énergie 201. Ainsi, le dispositif d'absorption d'énergie 201 présente une première portion où la largeur Pd présente une première valeur P1 et une deuxième portion où la largeur Pd présente une deuxième valeur P2. Dans l'exemple de réalisation représenté sur la [Fig.7], la largeur Pd, P1 de la première portion du dispositif 201 est plus petite que la largeur Pd, P2 de la deuxième portion du dispositif 201.

La hauteur H du dispositif d'absorption d'énergie 201, telle qu'elle a été définie précédemment, est constante le long de la direction d'allongement A du dispositif d'absorption d'énergie 201.

Conformément aux modes de réalisation précédemment décrits, les crêtes 117 de l'âme 113 illustrée sur la [Fig.7] sont orientées de sorte qu'une partie d'entre elles définit la face externe 103 du dispositif d'absorption d'énergie 201. En outre, une autre partie des crêtes 117 de la forme ondulée 115 définit la face interne 105 dispositif d'absorption d'énergie 201.

On comprend dans ce contexte que l'amplitude AMPc de la forme ondulée 115 telle qu'elle a été définie précédemment varie le long de la direction principale d'allongement A du dispositif d'absorption d'énergie 201, c'est-à-dire le long de la direction d'extension E. Plus particulièrement, la forme ondulée 115 présente une première partie 119 où l'amplitude AMPc présente une première valeur AMP1 et une deuxième partie 121 où la largeur AMPc présente une deuxième valeur AMP2. Dans l'exemple de réalisation représenté sur la [Fig.7], l'amplitude AMPc, AMP1 de la première partie 119 de la forme ondulée 115 est plus petite que l'amplitude AMPc, AMP2 de la deuxième partie 121 de la forme ondulée 115.

Il convient de noter que, dans ce deuxième mode de réalisation, la première portion du dispositif 201 correspond à la première partie 119 de la forme ondulée 115 et que la deuxième portion du dispositif 201 correspond à la deuxième partie 121 de la forme ondulée 115. Par conséquent, l'amplitude AMPc de la forme ondulée 115 correspond à la largeur Pd du dispositif d'absorption d'énergie 201.

Dans ce deuxième mode de réalisation, la variation de largeur du dispositif d'absorption d'énergie d'une extrémité longitudinale à l'autre est ainsi réalisée par une variation de l'amplitude de la forme ondulée.

En référence à la [Fig.7], les crêtes 117 de la forme ondulée 115 de l'âme 113 présentent un rayon de courbure Rc sensiblement constant le long de la direction d'extension E.

De manière similaire au mode de réalisation illustré sur les figures 1 à 5, le dispositif d'absorption d'énergie 201 selon le deuxième mode de réalisation, l'épaisseur EPAc de la forme ondulée 115 est sensiblement constante le long de la direction d'extension E et correspond à la hauteur H du dispositif d'absorption d'énergie 201, et le pas PASc de la forme ondulée 115 varie le long de la direction d'extension E et donc de la direction principale d'allongement A. Par ailleurs, le dispositif d'absorption d'énergie 201 présente un plan longitudinal et vertical de symétrie 300.

### Largeur

Le troisième mode de réalisation du dispositif d'absorption d'énergie selon l'invention, illustré sur la [Fig.8], diffère du deuxième mode de réalisation notamment en ce que la face externe 103 du dispositif d'absorption d'énergie 301 est formée au moins en partie par une tranche de la forme ondulée 115 de l'âme 113 en lieu et place des crêtes 117 tel que décrit dans le deuxième mode de réalisation.

Tel que cela a pu être décrit précédemment, une tranche de la forme ondulée 115 correspond à une section de cette forme ondulée dans un plan de coupe transversal et vertical. Il en résulte que des bords droits participent à définir la face externe 103 et qu'une partie des crêtes 117 définit au moins en partie la face supérieure 107 du dispositif d'absorption d'énergie 301, dans un plan sensiblement perpendiculaire au plan principal d'allongement 200.

Les éléments identiques au premier mode de réalisation et au deuxième mode de réalisation sont désignés par les mêmes références. Pour plus de détails sur ces éléments identiques, on pourra se référer à la description ci-dessus. Il convient toutefois de noter que le dispositif d'absorption d'énergie selon ce troisième mode de réalisation, avec une face externe définie au moins en partie par une tranche de la forme ondulée de l'âme, qui est ici uniquement décrit dans le cadre d'une application avec une pluralité de dispositifs d'absorption d'énergie, pourrait être mis en œuvre seul.

De manière similaire au deuxième mode de réalisation, dans ce troisième mode de réalisation représenté sur la [Fig.8], la largeur Pd du dispositif d'absorption d'énergie 201 varie le long de la direction principale d'allongement A c'est-à-dire le long de la direction d'extension E de la succession des crêtes 117 de la forme ondulée 115 de l'âme 113 formant le dispositif d'absorption d'énergie 301.

En référence à la [Fig.8], le PASc de la forme ondulée 115 est sensiblement constant le long de la direction d'extension E. L'amplitude AMPc de la forme ondulée 115 est aussi sensiblement constante. L'amplitude AMPc de la forme ondulée 115 correspond à la hauteur H du dispositif d'absorption d'énergie 301.

Le rayon de courbure Rc des crêtes 117 de la forme ondulée 115 est sensiblement constant le long de la direction d'extension E de la forme ongulée 115. Le rayon de courbure Rc des crêtes 117 correspond, ici, au rayon d'un cercle dans lequel s'inscrit la crête 117, le cercle étant vu sur un plan comprenant la direction d'extension E de la succession de crêtes 117 et parallèle à un plan principal d'allongement 200 de la face interne 105.

L'épaisseur EPAc de la forme ondulée 115 varie le long de la direction d'extension E. Elle est ici définie comme étant la distance entre deux extrémités de la forme ondulée 115 mesurée le long d'un axe perpendiculaire à la direction d'extension E et contenu dans un plan perpendiculaire au plan principal d'allongement 200 de la face interne 105.

On comprend que, par la forme du dispositif d'absorption d'énergie 301 et par l'agencement de forme ondulée 115 de l'âme 113 au sein du dispositif d'absorption d'énergie 301, l'épaisseur EPAc de la forme ondulée 115 correspond à la largeur Pd du dispositif d'absorption d'énergie 301.

Dans ce troisième mode de réalisation, la variation de largeur du dispositif d'absorption d'énergie d'une extrémité longitudinale à l'autre est ainsi réalisée par une variation de l'épaisseur de la forme ondulée.

Dans le deuxième mode de réalisation et dans le troisième de réalisation, les moyens de fixation 153 venus de matières avec la structure plastique 133 sont des fûts, non visibles, intégrés dans un volume défini par des faces de la structure plastique 133.

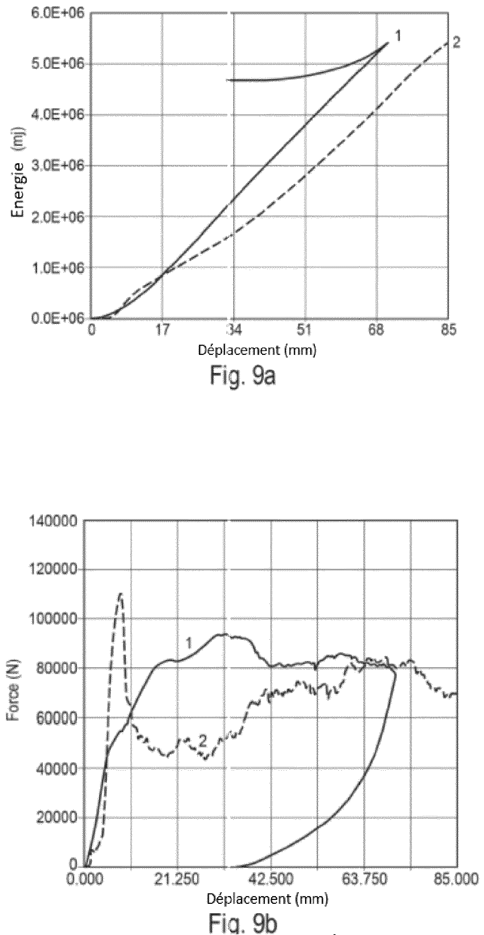

La [Fig.9] est un ensemble de figures 9a, 9b illustrant des résultats de test pour deux dispositifs d'absorption d'énergie différents

La courbe portant le numéro « 1 » correspond à un dispositif d'absorption selon l'invention dont la face externe 103 est formée au moins en partie par des crêtes 117 de la forme ondulée 115 de l'âme 113 (ci-après dispositif 1). La courbe portant le numéro « 2 » correspond à un dispositif d'absorption dont la surface externe 103 est formée au moins en partie par au moins une tranche de la forme ondulée 115 de l'âme 113 (ci-après dispositif 2).

Tel qu'illustré par la figure 9a, le dispositif 1 selon l'invention permet d'emmagasiner plus d'énergie que le dispositif 2 lorsque la face frontale de chaque dispositif est déplacée de la même distance lors d'un choc.

La figure 9b montre la force de réaction mesurée au niveau d'un impacteur utilisé pour le test lorsque celui-ci entre en collision avec le dispositif d'absorption d'énergie. Tel qu'illustré par la figure 9b, au début de la collision, un pic de force de réaction d'environ 10500N est mesurée au niveau de l'impacteur lorsque la face frontale du dispositif 2 est déplacée de 10mm environ. En revanche, la force de réaction mesurée pour le dispositif 1 augmente de façon constante pendant l'écrasement, ladite force de réaction étant toujours inférieure à la valeur pic dans le cas du premier dispositif 1.

L'invention telle qu'elle vient d'être décrite permet de d'atteindre les buts qu'elle s'était fixés, notamment en ce qu'elle permet de proposer un dispositif d'absorption d'énergie, notamment utilisable pour former un pare-chocs de véhicule automobile, qui permet de proposer, entre les zones de fixation sur l'élément à protéger des chocs, une zone d'absorption d'énergie dont les motifs peuvent être facilement modifiés pur s'adapter aux besoins d'absorption d'énergie du véhicule par exemple, et qui permet de répartir les efforts vers ces zones de fixation pour transmettre à la structure de caisse.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif d'absorption d'énergie (101, 201, 301) de véhicule (1) présentant une direction principale d'allongement (A) et une face externe (103) destinée à recevoir au moins un choc, le dispositif d'absorption d'énergie (101, 201, 301) comprenant au moins une âme (113) composée d'au moins un matériau d'absorption d'énergie, l'âme (113) comportant une forme ondulée (115) avec une succession de crêtes (117) selon une direction d'extension (E) parallèle à la direction principale d'allongement (A), et au moins une structure plastique (133) formant un ensemble monobloc avec l'âme (113) et comportant des moyens de fixation (153) du dispositif d'absorption d'énergie (101, 201,301) sur un élément (3) du véhicule (1) qui est à protéger,
dans lequel la face externe (103) est formée au moins en partie par des crêtes (117) de la forme ondulée (115) de l'âme (113) et
dans lequel les moyens de fixation (153) sont venus de matière avec la structure plastique (133) , **caractérisé en ce que** la structure plastique (133) est d'un matériau différent de l'âme (113)et surmoulée sur l'âme (113).

2. Dispositif d'absorption d'énergie (101, 201, 301) selon la revendication précédente, dans lequel la succession de crêtes (117) s'étend sur toute la longueur (U) du dispositif d'absorption d'énergie (101, 201, 301) selon la direction principale d'allongement (A).

3. Dispositif d'absorption d'énergie (101, 201, 301) selon l'une quelconque des revendications précédentes, dans lequel la forme ondulée (115) présente une amplitude (AMPc) qui varie selon la direction d'extension (E) de la succession de crêtes (117).

4. Dispositif d'absorption d'énergie (101, 201, 301) selon l'une quelconque des revendications précédentes, dans lequel la forme ondulée (115) présente un pas (PASc) qui varie selon la direction d'extension (E) de la succession de crêtes (117).

5. Dispositif d'absorption d'énergie (101, 201, 301) selon l'une quelconque des revendications précédentes, dans lequel la forme ondulée (115) présente une forme variable le long de la direction d'allongement du dispositif d'absorption d'énergie, en comportant une première partie (119) et une deuxième partie (121), la première partie (119) de la forme ondulée (115) présente une configuration différente d'une configuration de la deuxième partie (121) de la forme ondulée (115).

6. Dispositif d'absorption d'énergie (101, 201, 301) selon l'une quelconque des revendications précédentes, dans lequel le matériau d'absorption d'énergie est un plastique renforcé de fibres de verre.

7. Véhicule (1) comprenant au moins un élément (3) à protéger des chocs et au moins un dispositif d'absorption d'énergie (101, 201, 301) selon l'une quelconque des revendications 1 à 6, le dispositif d'absorption d'énergie (101, 201, 301) étant fixé à l'élément (3) à protéger grâce aux moyens de fixation (153) de sorte que la face externe (103) est à l'opposé de l'élément à protéger (3) et une face interne (105) du dispositif d'absorption d'énergie (101, 201, 301) opposée à la face externe (103) est en regard de l'élément (3) à protéger.

## Patentansprüche

1. Energieabsorptionsvorrichtung (101, 201, 301) für ein Fahrzeug (1), die eine Haupterstreckungsrichtung (A) und eine Außenfläche (103) aufweist, die dazu konfiguriert ist, mindestens einen Stoß aufzunehmen, wobei die Energieabsorptionsvorrichtung (101, 201, 301) mindestens einen Kern (113), der aus mindestens einem Energieabsorptionsmaterial besteht, wobei der Kern (113) eine Wellenform (115) mit einer Aufeinanderfolge von Wellenkämmen (117) entlang einer Erstreckungsrichtung (E) parallel zur Haupterstreckungsrichtung (A) aufweist, und mindestens eine Kunststoffstruktur (133) umfasst, die eine einstückige Baugruppe mit dem Kern (113) bildet und Befestigungsmittel (153) für die Energieabsorptionsvorrichtung (101, 201, 301) an einem zu schützenden Element (3) des Fahrzeugs (1) umfasst, wobei die Außenfläche (103) zumindest teilweise durch Wellenkämme (117) der Wellenform (115) des Kerns (113) gebildet ist und wobei die Befestigungsmittel (153) einstückig mit der Kunststoffstruktur (133) ausgebildet sind,
**dadurch gekennzeichnet, dass** die Kunststoffstruktur (133) aus einem anderen Material als der Kern (113) besteht und auf den Kern (113) überspritzt ist.

2. Energieabsorptionsvorrichtung (101, 201, 301) nach dem vorhergehenden Anspruch, wobei sich die Aufeinanderfolge von Wellenkämmen (117) über die gesamte Länge (U) der Energieabsorptionsvorrichtung (101, 201, 301) entlang der Haupterstreckungsrichtung (A) erstreckt.

3. Energieabsorptionsvorrichtung (101, 201, 301) nach einem der vorhergehenden Ansprüche, wobei die Wellenform (115) eine Amplitude (AMPc) aufweist, die entlang der Erstreckungsrichtung (E) der Aufeinanderfolge von Wellenkämmen (117) variiert.

4. Energieabsorptionsvorrichtung (101, 201, 301) nach einem der vorhergehenden Ansprüche, wobei die Wellenform (115) eine Teilung (PASc) aufweist, die entlang der Erstreckungsrichtung (E) der Aufeinanderfolge von Wellenkämmen (117) variiert.

5. Energieabsorptionsvorrichtung (101, 201, 301) nach einem der vorhergehenden Ansprüche, wobei die Wellenform (115) eine variable Form entlang der Erstreckungsrichtung der Energieabsorptionsvorrichtung aufweist, indem sie einen ersten Teil (119) und einen zweiten Teil (121) umfasst, wobei der erste Teil (119) der Wellenform (115) eine Konfiguration aufweist, die sich von einer Konfiguration des zweiten Teils (121) der Wellenform (115) unterscheidet.

6. Energieabsorptionsvorrichtung (101, 201, 301) nach einem der vorhergehenden Ansprüche, wobei das Energieabsorptionsmaterial ein glasfaserverstärkter Kunststoff ist.

7. Fahrzeug (1), umfassend mindestens ein vor Stößen zu schützendes Element (3) und mindestens eine Energieabsorptionsvorrichtung (101, 201, 301) nach einem der Ansprüche 1 bis 6, wobei die Energieabsorptionsvorrichtung (101, 201, 301) mittels der Befestigungsmittel (153) an dem zu schützenden Element (3) befestigt ist, so dass die Außenfläche (103) dem zu schützenden Element (3) abgewandt ist und eine der Außenfläche (103) gegenüberliegende Innenfläche (105) der Energieabsorptionsvorrichtung (101, 201, 301) dem zu schützenden Element (3) zugewandt ist.

## Claims

1. Vehicle (1) energy absorption device (101, 201, 301) having a main direction of elongation (A) and an external face (103) configured to receive at least one impact, the energy absorption device (101, 201, 301) comprising at least one core (113) composed of at least one energy absorption material, the core (113) comprising a corrugated shape (115) with a succession of crests (117) along a direction of extension (E) parallel to the main direction of elongation (A), and at least one plastic structure (133) forming a one-piece assembly with the core (113) and comprising fixing means (153) for the energy absorption device (101, 201, 301) on an element (3) of the vehicle (1) which is to be protected,
in which the external face (103) is formed at least partially by crests (117) of the corrugated shape (115) of the core (113) and
in which the fixing means (153) are integral with the plastic structure (133),
**characterized in that** the plastic structure (133) is of a material different from the core (113) and overmolded onto the core (113).

2. Energy absorption device (101, 201, 301) according to the preceding claim, in which the succession of crests (117) extends over the entire length (U) of the energy absorption device (101, 201, 301) along the main direction of elongation (A).

3. Energy absorption device (101, 201, 301) according to any one of the preceding claims, in which the corrugated shape (115) presents an amplitude (AMPc) which varies along the direction of extension (E) of the succession of crests (117).

4. Energy absorption device (101, 201, 301) according to any one of the preceding claims, in which the corrugated shape (115) presents a pitch (PASc) which varies along the direction of extension (E) of the succession of crests (117).

5. Energy absorption device (101, 201, 301) according to any one of the preceding claims, in which the corrugated shape (115) presents a variable shape along the direction of elongation of the energy absorption device, by comprising a first part (119) and a second part (121), the first part (119) of the corrugated shape (115) presents a configuration different from a configuration of the second part (121) of the corrugated shape (115).

6. Energy absorption device (101, 201, 301) according to any one of the preceding claims, in which the energy absorption material is a glass fiber reinforced plastic.

7. Vehicle (1) comprising at least one element (3) to be protected from impacts and at least one energy absorption device (101, 201, 301) according to any one of claims 1 to 6, the energy absorption device (101, 201, 301) being fixed to the element (3) to be protected by means of the fixing means (153) such that the external face (103) is opposite the element to be protected (3) and an internal face (105) of the energy absorption device (101, 201, 301) opposite the external face (103) is facing the element (3) to be protected.
